# EUROPEAN PATENT SPECIFICATION

(11) **EP 1 501 876 B1**
(45) Date of publication and mention of the grant of the patent: **11.07.2007**
(21) Application number: 03723594.2
(22) Date of filing: 06.05.2003
(51) Int. Cl.: C08F 2/20, D21H 21/10

(54) **PROCESS FOR PREPARING A POLYMER DISPERSION**
VERFAHREN ZUR HERSTELLUNG VON POLYMERDISPERSIONEN
PROCEDE DE PREPARATION D'UNE DISPERSION DE POLYMERE

(30) Priority: 07.05.2002 EP 02445055
(43) Date of publication of application: 02.02.2005
(73) Proprietor: Akzo Nobel N.V., 6800 SB Arnhem (NL); Eka Chemicals AB, 445 80 Bohus (SE)
(72) Inventor: STRUCK, Oliver, 52349 Düren (DE); PRZYBYLA, Christian, 47051 Duisburg (DE); SIEGER, Achim, 52355 Düren (DE); HAHN, Mathias, 14557 Wilhelmshorst (DE); RUPPELT, Dirk, 14469 Potsdam (DE); JAEGER, Werner, 14532 Kleinmachnow (DE)
(74) Representative: Jönsson, Christer
(86) International application number: PCT/SE2003/000726
(87) International publication number: WO 2003/095501

(56) References cited:
- US-A- 4 929 655
- US-B1- 6 262 168

## Description

The present invention relates to a process for preparing a polymer dispersion. It also relates to a polymer dispersion, the use of the polymer dispersion and a process for producing paper.

### Background of the invention

Aqueous dispersions of cationic polymers are; for example, used as retention aids in paper manufacturing industry. Other uses are, for example, as flocculants for treating wastewater, as thickeners, and soil improving agents. Generally, these polymer dispersions comprise a dispersed polymer and a dispersant in which the dispersant usually is a polymeric dispersant. These polymer dispersions can be prepared by polymerising a reaction mixture of water-soluble monomers in the presence of a salt. Finished polymer will precipitate from the aqueous salt solution and, by using a suitable dispersant, form a polymer dispersion.

There are a number of criteria that the polymer dispersion should fulfil to give good results in the final application and be of commercial interest. Such criteria are, for example, the process viscosity, active content, stability, good retention properties, and easiness of preparing the polymer dispersion including preparing the dispersant. Also, criteria such as environmental and safety aspects are of importance.

By process viscosity is meant the viscosity of the reaction mixture when producing the polymer dispersion. The viscosity should be kept low and viscosity peaks should be avoided, or at least reduced as much as possible, during the production of the polymer dispersion. EP 0630909 B1, discloses a process for preparing a dispersion of a water-soluble polymer comprising polymerising a water-soluble monomer in an aqueous reaction mixture containing a salt.

The shelf life of the dispersion, i.e., the stability of the polymer dispersion over time, is an important property. An efficient dispersant is needed for keeping the polymer particles stable in dispersion without settling as sediment. U.S. Patent No. 6,221,957 discloses an aqueous saline polymer dispersion where the dispersant is based on a cationic polymer containing hydrophobic units. According to the document, the reason for imparting hydrophobic units is to increase the viscosity of the dispersant polymer, which is said to improve the stability of the dispersion. However, a too high viscosity of the polymer dispersion is not beneficial to the end-application. Also, the inclusion of hydrophobic units in the dispersant polymer requires the dispersant to be produced in organic solvents such as ketones, alcohols and ethers. These solvents have to be removed before using the dispersant in aqueous polymer dispersions, which requires additional processing steps. The organic solvents have also environmental drawbacks and can be inflammable which is negative from a safety point of view.

A further important factor to consider is the active content, i.e., the amount of dispersed polymer in the polymer dispersion. A higher active content gives lower transportation costs and easier handling at the end-application. By using an efficient dispersant, dispersions with a higher active content can be obtained at the same time the viscosity can be kept low. However, it may be difficult to combine a high active content with good performance in retention and dewatering in a papermaking process.

The cationic charge of a dispersed polymer effects its ability to form stable dispersions. There exist reasons for providing stable polymer dispersions with a comparatively low cationic charge. Such reasons are, for example, FDA limits of cationic monomers for certain use, cost, risks of overcharging the cellulosic suspension when used in papermaking.

During preparation of a polymer dispersion, deposits of polymer may form and stick to the reaction vessel and stirrer. This leads to time consuming cleaning procedures of the reaction equipment.

It is an object of the present invention to provide a process for preparing a polymer dispersion in which the process viscosity is kept low and smooth during preparation without any large viscosity peaks, and which gives no deposits. There is a further object of the present invention to provide a polymer dispersion having high stability, high active content with comparatively low cationic charge, and which at the same time gives good retention when used in papermaking processes.

### The invention

According to the invention it has surprisingly been found that a highly stable polymer dispersion having high active content of a dispersed polymer and low process viscosity can be achieved by a process for preparing an aqueous polymer dispersion according to the present invention. The process, according to the invention, comprises polymerising one or more water-soluble monomers (m) in an aqueous solution of salt in the presence of a dispersant polymer, wherein the dispersant polymer is a co-polymer of a monomer mixture (M) comprising at least one cationic monomer (m₃) and at least one monomer (m₄) which is tetrahydrofurfuryl acrylate, tetrahydrofurfuryl methacrylate, or a monomer of the general formula (I): 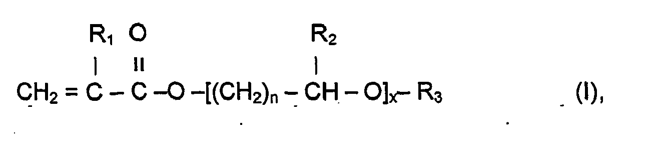 wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, where, the monomer mixture (M) is being substantially free from monomers which are not soluble in water and/or the dispersant polymer is obtainable by polymerising the monomer mixture (M) in a reaction medium which is substantially free from organic solvents and/or the dispersant polymer is obtainable by polymerising the monomer mixture (M) in an aqueous reaction medium.

The invention further comprises an aqueous polymer dispersion obtainable by the process according to the invention.

The invention further comprises an aqueous polymer dispersion comprising: (a) a dispersed polymer, and, (b) a dispersant polymer which is a co-polymer of a monomer mixture (M) comprising at least one cationic monomer (m₃) and at least one monomer (m₄) which is tetrahydrofurfuryl acrylate, tetrahydrofurfuryl methacrylate, or a monomer of the general formula (I): 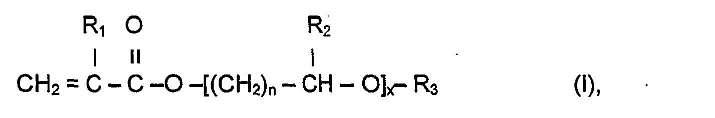 wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, and, (c) a salt, where, the monomer mixture (M) is being substantially free from monomers which are not soluble in water and/or the dispersant polymer is obtainable by polymerising the monomer mixture (M) in a reaction medium which is substantially free from organic solvents.

The invention further comprises use of a polymer dispersion as retention aid for paper manufacturing, as thickening agent and/or as soil improvement agent.

Finally, the present invention comprises a process for the production of paper from an aqueous suspension containing cellulosic fibres, and optional fillers, which comprises adding to the suspension an aqueous polymer dispersion according to the invention, forming and draining the suspension on a wire.

The water-soluble monomers, (m), suitably comprise vinyl monomers, preferably a non-ionic monomer, (m₁), and a cationic monomer, (m₂). The non-ionic monomer, (m₁), is preferably a monomer of the general formula (II): 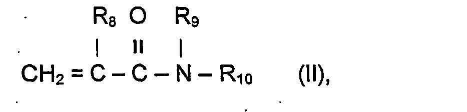 wherein R₈ is hydrogen or methyl, and R₉ and R₁₀ are, independently from each other, any of hydrogen, C₁-C₂ alkyl, or isopropyl. Preferred monomers (m₁) include acrylamide, methacrylamide, N-isopropylacrylamide, N-isopropylmethacrylamide, N-t-butylacrylamide, N-t-butylmethacrylamide, N-methylolacrylamide, and N-methylolmethacrylamide.

The cationic monomer, (m₂), is preferably a monomer of the general formula (III): 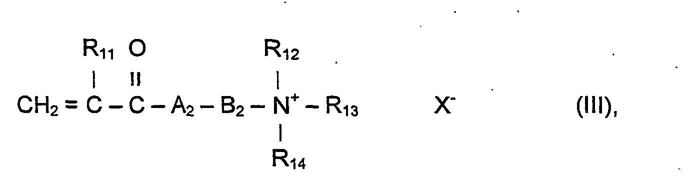 wherein R₁₁ is hydrogen or methyl, R₁₂, R₁₃ and R₁₄ are, independently from each other, any of hydrogen, C₁-C₈ alkyl or benzyl, A₂ is oxygen or NH, B₂ is C₂-C₄ alkyl or C₂-C₄ hydroxyalkyl, X⁻ is an anionic counterion, suitably a monovalent anion, e.g. chloride. Preferred monomers (m₂) include acryloyl-oxyethyl-trimethylammoniumchloride (ADAM), acryloyloxyethyl-benzyldimethyl-ammoniumchloride (ADAMBQ), methacryloyloxyethyl-trimethylammoniumchloride (MADAM), methacryloyl-oxyethyl-benzyldimethylammonium-chloride (MADAMBQ), acrylamidopropyl-trimethylammoniumchloride (TMAPAA), acrylamidopropyl-benzyl-dimethylammoniumchloride (BDMAPAA), methacrylamidopropyl-trimethylammonium-chloride (TMAPMA), and methacrylamidopropyl-benzyldimethylammoniumchloride (BDMAPMA).

The molar ratio between monomer (m₁) and monomer (m₂) is suitably from about 95:5 to about 50:50, preferably from about 94:6 to about 70:30, most preferably from about 92:8 to about 85:15.

The weight average molecular weight of the dispersed polymer is suitably from about 1.000.000 to about 15.000.000 g/mole, preferably from about 5.000.000 to about 10.000.000 g/mole, most preferably from about 6.000.000 to about 9.000.000 g/mole.

In one aspect of the invention, the dispersant polymer is made by polymerising the monomer mixture (M) in a medium which is suitably substantially free from organic solvents. By "substantially free from organic solvents" is herein meant that the medium comprises from 0 to about 10 weight % of organic solvents, suitably from 0 to about 5 weight %, preferably from 0 to about 1 weight %.

In another aspect of the invention, the dispersant polymer is made by polymerising the monomer mixture (M) in a medium which is suitably substantially free from monomers which are not soluble in water. By "substantially free from monomers which are not soluble in water" is herein meant that the monomer mixture comprises from 0 to about 0.5 weight % of monomers which are not soluble in water, suitably from 0 to about 0.1 weight %, preferably from 0 to about 0.001 weight %, based on the total amount of monomers.

The aqueous solution of salt suitably comprises a polyvalent anion salt, preferably a salt belonging to the group of sulphates, or phosphates, such as sodium sulphate, ammonium sulphate, magnesium sulphate, sodium dihydrogen phosphate, diammonium hydrogenphosphate, dipotassium hydrogenphosphate, and methylsulphate salt. Most preferably, ammonium sulphate and sodium sulphate are used. Mixtures of two or more of these salts are also suitable. The concentration of salt, based on the amount of water, is suitably from about 1 to about 50 weight %, preferably from about 10 to about 40 weight %, most preferably from about 15 to about 35 weight %. Besides being present during the polymerisation, additional salt may also be added after polymerisation to reduce the viscosity of the polymer dispersion.

The cationic vinyl monomer (m₃) in the dispersant polymer suitably belongs to the group of diallyl-dimethylammoniumchloride (DADMAC), vinylpyridiniumchloride, N-vinylimidazoliniuimchloride, vinylbenzyl-trimethylammoniumchloride, and/or has/have the general formula (IV): 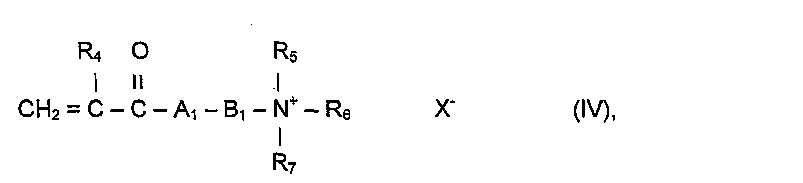 wherein R₄ is hydrogen or methyl, R₅, R₆ and R₇ are, independently from each other, any of hydrogen, C₁-C₈ alkyl, or, benzyl, A₁ is NH or oxygen, B₁ is C₁-C₂ alkyl or C₁-C₂ hydroxyalkyl, X⁻ is an anionic counterion, suitably a monovalent anion, e.g. chloride. Preferred monomers m₃ include acryloyl-oxyethyl-trimethylammoniumchloride (ADAM), acryloyloxyethyl-benzyldimethyl-ammoniumchloride (ADAMBQ), methacryloyloxyethyl-trimethylammoniumchloride (MADAM), methacryloyloxyethyl-benzyldimethylammonium-chloride (MADAMBQ), acrylamidopropyl-trimethyl-ammoniumchloride (TMAPAA), acrylamidopropyl-benzyl-dimethylammoniumchloride (BDMAPAA), methacrylamidopropyl-trimethylammoniumchloride (TMAPMA), and methacrylamidopropyl-benzyl-dimethylammoniumchloride (BDMAPMA). The dispersant polymer suitably comprises from about 80 to about 99.9 mole % of monomer(s) which is/are belonging to the group of cationic monomers, m₃, preferably from about 90 to about 99 mole %, most preferably from about 92 to about 98.5 mole %.

Preferred monomers (m₄) in the dispersant polymer belong to the group of monofunctional vinylendcapped ethers and monofunctional vinylendcapped polyethers, are suitably amphiphilic, and include tetrahydrofurfuryl acrylate, tetrahydrofurfuryl methacrylate, butyl diglycol methacrylate, methoxypolyethylene glycol methacrylate, poly(ethylene glycol) phenyl ether acrylate, poly(ethylene glycol) methyl ether acrylate (M-PEG acrylate), poly(ethylene glycol) methyl ether methacrylate (M-PEG methacrylate), ethylene glycol phenyl ether acrylate, ethylene glycol phenyl ether methacrylate, di(ethylene glycol) ethyl ether acrylate, di(ethylene glycol) ethyl ether methacrylate, ethylene glycol methyl ether acrylate, and ethylene glycol methyl ether methacrylate. The most preferred monomers (m₄) are poly(ethylene glycol) methyl ether acrylate (M-PEG acrylate) and poly(ethylene glycol) methyl ether methacrylate (M-PEG methacrylate). The dispersant polymer suitably comprises from about 0.1 to about 20 mole % of monomer(s) (m₄), preferably from about 1 to about 10 mole %, most preferably from about 1.5 to about 8 mole %.

The weight average molecular weight of the dispersant polymer is suitably from about 20.000 to about 5.000.000 g/mole, preferably from about 50.000 to about 3.000.000 g/mole, most preferably from about 100.000 to about 2.000.000 g/mole.

The polymerisation in the process of the invention is suitably a free-radical polymerisation. The initiator is suitably a radical former, preferably a water-soluble redox initiator or a water-soluble azo-initiator. Preferred initiators include dibenzoylperoxide, sodiummetabisulphite and 2,2'-azobis-(amidinpropan) hydrochloride.

According to the invention, the dispersant polymer is suitably produced in a reaction medium, which is substantially free from organic solvents, and can be added directly to the process of preparing the polymer dispersion without the need of any separation or purification steps. The dispersant polymer is suitably added to the process of preparing the polymer dispersion as a composition comprising a substantial part of the reaction medium in which it was produced. Suitably, from about 10 to about 100 % of the original amount of reaction medium remains in the dispersant polymer composition, preferably from about 50 to about 100 %, even more preferably from about 80 to about 100 %, most preferably from about 95 to about 100 %.

The polymer dispersion suitably comprises from about 5 to about 40 weight % of the dispersed polymer, preferably from about 10 to about 30 weight %, most preferably from about 12 to about 25 weight %. Furthermore, the polymer dispersion suitably comprises from about 0.2 to about 5 weight % of the dispersant polymer, preferably from about 0.5 to about 3 weight %, most preferably from about 0.8 to about 1.5 weight %.

The polymer dispersion may also comprise additional substances, such as cross-linkers and branching agents.

The polymerisation temperature when preparing the polymer dispersion may vary depending on, e.g., which monomers and polymerisation initiator are being used. Suitably, the polymerisation temperature is from about 30 to about 90°C, preferably from about 40 to about 70°C. The process is suitably a semi-batch process, i.e., the monomers (m) are both present from the beginning of the polymerisation process and further added at a later stage, either in one or more portions or continuously over a period of time during the reaction. The reaction mixture is suitably stirred during the polymerisation process at a stirring rate suitable for the process. Suitably, the stirring rate is from about 100 to about 1000 rpm.

The salt is suitably present from the beginning of the process according to the invention. An additional amount of salt can be added after the polymerisation has been completed in order to reduce the viscosity of the polymer dispersion. Alternatively, a cationic polyelectrolyte can be added after the polymerisation has been completed. The cationic polyelectrolyte is suitably a homo- or copolymer of one or more of DADMAC, ADAM MC Q and ADAM BZ Q, and has a weight average molecular weight of suitably from about 1.000 to about 500.000 g/mole, preferably from about 5.000 to about 100.000 g/mole.

In a preferred embodiment of the invention, a dispersant is made which is a copolymer of diallyl-dimethylammoniumchloride (DADMAC), acryloxyethyl-trimethyl-ammoniumchloride (ADAM MC Q), and poly-(ethylenglycol) methylether methacrylate (M-PEG-acrylate), which is used in a polymer dispersion where a co-polymer of acrylamide and acryloxyethyl-dimethylbenzylammoniumchloride (ADAM BZ Q) is the dispersed polymer.

When using the polymer dispersion, according to the invention, in papermaking processes, the dispersion is added to the suspension of cellulosic fibres, and optional fillers, to be dewatered in amounts which can vary within wide limits depending on, inter alia, type and number of components, type of furnish, filler content, type of filler, point of addition, etc. The dispersed polymer is usually added in an amount of at least 0.001%, often at least 0.005% by weight, based on dry substance in the stock to be dewatered, and the upper limit is usually 3% and suitably 1.5% by weight. The polymer dispersion according to the invention is suitably diluted before adding it to the cellulosic suspension. Further additives which are conventional in papermaking can of course be used in combination with the polymer dispersion according to the invention, such as, for example, silica-based sols, dry strength agents, wet strength agents, optical brightening agents, dyes, sizing agents like rosin-based sizing agents and cellulose-reactive sizing agents, e.g. alkyl and alkenyl ketene dimers, alkyl and alkenyl ketene multimers, and succinic anhydrides, etc. The cellulosic suspension, or stock, can also contain mineral fillers of conventional types such as, for example, kaolin, china clay, titanium dioxide, gypsum, talc and natural and synthetic calcium, carbonates such as chalk, ground marble and precipitated calcium carbonate. The term "paper", as used herein, of course include not only paper and the production thereof, but also other cellulosic fibre-containing sheet or web-like products, such as for example board and paperboard, and the production thereof. The process can be used in the production of paper from different types of suspensions of cellulose-containing fibres and the suspensions should suitably contain at least 25% by weight and preferably at least 50% by weight of such fibres, based on dry substance. The suspension can be based on fibres from chemical pulp such as sulphate, sulphite and organosolv pulps, mechanical pulp such as thermomechanical pulp, chemo-thermomechanical pulp, refiner pulp and groundwood pulp, from both hardwood and softwood, and can also be based on recycled fibres, optionally from de-inked pulps, and mixtures thereof.

The invention will now further be described in connection with the following examples which, however, not should be interpreted as limiting the scope of the invention.

### Examples

### Examples 1-5:

Dispersant polymers were synthesised by polymerising aqueous mixtures of diallyl-dimethylammoniumchloride (DADMAC), acryloxyethyl-trimethyfammoniumchforide (ADAM MC Q, and poly-(ethylenglycol) methylether acrylate (M-PEG-acrylate).
The results were aqueous solutions of the dispersants of about 40 weight % dry content of dispersant polymer.

**Table 1. Dispersant polymers**

| Example | Monomer composition (mole %) | | | Weight average molecular weight* (g/mole) |
|---|---|---|---|---|
| | DADMAC | ADAM MC Q | M-PEG acrylate - | |
| 1 | 48.75 | 48.75 | 2.5 | 960.000 |
| 2 | 47.5 | 47.5 | 5.0 | 760.000 |
| 3 | 0 | 97.5 | 2.5 | 1.300.000 |
| 4 | 24.4 | 73.1 | 2.5 | 1.680.000 |
| 5 | 97.5 | 0 | 2.5 | 150.000 |

| | | | | |
|---|---|---|---|---|
| * Molecular weight of dispersant polymer determined by GPC | | | | |

### Examples 6-8:

Dispersant polymers were also synthesised by polymerising aqueous mixtures of diallyl-dimethylammoniumchloride (DADMAC), acryloxyethyl-trimethylammoniumchloride (ADAM MC Q), and different monomers (m₄) of the group monofunctional vinylendcapped ethers and polyethers. The monomer composition in all examples was 48.75 mole % DADMAC, 48.75 mole % ADAM MC Q, and 2.5 mol % amphiphilic monomer. Also here, the results of the polymerisation were aqueous solutions of the dispersants of about 40 weight % dry content of dispersant polymer.

**Table 2. Dispersant polymers**

| Example | Monomer | Weight average molecular weight* (g/mole) |
|---|---|---|
| 6 | M-PEG-methacrylate | 800.000 |
| 7 | Tetrahydrofurfurylmethacrylate | 1.050.000 |
| 8 | N-butoxymethylmethacrylamide | 1.100.000 |

| | | |
|---|---|---|
| * Molecular weight of dispersant polymer determined by GPC | | |

### Example 9 (comparative):

A dispersant without any monomer m₄ was also synthesised by polymerising aqueous mixtures of diallyl-dimethylammoniumchloride (DADMAC), and acryloxyethyl-trimethylammoniumchloride (ADAM MC Q).

**Table 3. Comparative dispersant**

| Example | Monomer composition(mole %) | | Average molecular weight* (g/mole) |
|---|---|---|---|
| | DADMAC | ADAM MC Q | |
| 9 | 50 | 50 | 780.000 |

| | | | |
|---|---|---|---|
| * Molecular weight of dispersant polymer determined by GPC | | | |

### Examples 10-18:

Polymer dispersions were prepared by polymerising monomer mixtures comprising acrylamide and acryloxyethyl-dimethylbenzylammoniumchloride (ADAM B Q), in the presence of a polymer dispersant. A mixture of 225.5 g water, 105.5 g acrylamide (50 wt%), 23.64 g acryloxyethyl-dimethylbenzylammoniumchloride (80 wt%), 2.6 g EDTA (5 wt %), 6 g glycerine and 12.5 g of a 40 wt % dispersant according to Examples 1-9. 80 g ammoniumsulphate was added to the mixture. The temperature was raised to 50°C and 4.1 mg of 2,2'-azobis-(-2-amidinopropane)-dihydrochloride was added. The polymerisation was proceeded for 1.5 hrs. Thereafter, 4.17 g acryloxyethyl-dimethylbenzylammoniumchloride was added to the mixture for 4 hours, followed by the addition of 25 mg of the initiator. After one hour of reaction at 50°C, 20 g ammoniumsulphate was added.

Application tests regarding retention and dewatering in papermaking processes were made. To a furnish of 4g/L with a conductivity of 7 mS/cm was added 0.5 kg/t of dispersed polymer. The turbidity (NTU) and the retention time (s) was measured.

**Table 4. Polymer dispersions**

| Example | Dispersant | Active content (%) | Application test | |
|---|---|---|---|---|
| | | | Turbidity (NTU) | Retention time (s) |
| 10 | Ex. 1 | 15 | 56 | 10.8 |
| 11 | Ex. 2 | 20 | 60 | 11.7 |
| 12 | Ex. 3 | 15 | 53 | 10.9 |
| 13 | Ex. 4 | 20 | 58 | 11.5 |
| 14 | Ex. 5 | 15 | 62 | 10.6 |
| 15 | Ex. 6 | 20 | 55 | 10.8 |
| 16 | Ex. 7 | 23 | 68 | 11.5 |
| 17 | Ex. 8 | 23 | 66 | 11.5 |
| 18 (comparative) | Ex. 9 | 20 | 70 | 12.2 |

The process viscosity was low (lower than -2000 mPas) for all dispersions. It is concluded that the dispersions using dispersants according to the invention show better results in retention and dewatering.

### Example 19-20 (comparative):

Dispersant polymers were also synthesised by polymerising mixtures of diallyl-dimethylammoniumchloride (DADMAC), acryloxyethyl-trimethylammoniumchioride (ADAM MC Q), poly-(ethylenglycol) methylether acrylate (M-PEG-acrylate), and styrene in an aqueous solution.

**Table 5. Dispersant polymers**

| Example | Monomer composition (mole %) | | | | Comments |
|---|---|---|---|---|---|
| | DADMAC | ADAM MC Q | M-PEG acrylate | Styrene | |
| 19 | 59 | 37.5 | 2.5 | 1 | turbid solution |
| 20 | 55 | 37.5 | 2.5 | 5 | solids in solution |

The dispersant solution was turbid at 1 mole % of styrene present, and at 5 mole % of styrene also solids were present. When testing these dispersants in the preparation of a dispersion according to Examples 10-18, there was a gel formation during the dispersion preparation in both cases. Thus, no useful dispersion was possible to prepare.

### Example 21-22 (comparative):

Dispersant polymers were synthesised by polymerising mixtures of diallyl-dimethylammoniumchloride (DADMAC), acryloxyethyl-trimethylammoniumchloride (ADAM MC Q), poly-(ethylenglycol) methylether acrylate (M-PEG-acrylate), and styrene in an organic solvent according to the method in the examples of U.S. 6,221,957.

**Table 6. Dispersant polymers**

| Example | Monomer composition (mole %) | | | |
|---|---|---|---|---|
| | DADMAC | ADAM MC Q | M-PEG acrylate | Styrene |
| 21 | 60 | 37.5 | 2.5 | 0 |
| 22 | 60 | 36.5 | 2.5 | 1 |
| 23 | 60 | 32.5 | 2.5 | 5 |

When testing these dispersants in the preparation of a dispersion according to Examples 10-18, a gel was formed in all cases. Thus, no useful dispersion was possible to prepare.

### Example 24:

The shelf life, measured as sedimentation stability, was tested for dispersions according to Examples 10, 14, 15 and 17. Samples of the dispersions were centrifuged for 30 minutes at 300 rpm. The amount of polymer sediment was determined for each sample.

**Table 7. Sedimentation stability**

| Polymer dispersion | Active content (%) | Amount polymer sediment (%) |
|---|---|---|
| Ex. 10 | 15 | 0 |
| Ex. 14 | 15 | 0 |
| Ex. 15 | 20 | 0 |
| Ex. 17 | 23 | <5 |

It is concluded that polymer dispersions with long shelf life can be obtained by the present invention, also at high active contents.

## Claims

1. A process for preparing an aqueous polymer dispersion, which comprises polymerising one or more water-soluble monomers (m) in an aqueous solution of a salt in the presence of a dispersant polymer, **characterised in that** the dispersant polymer is a co-polymer of a monomer mixture (M) comprising at least one cationic vinyl monomer (m₃) and at least one monomer (m₄) which is tetrahydrofurfuryl acrylate, tetrahydrofurfuryl methacrylate, or a monomer of the general formula (I): 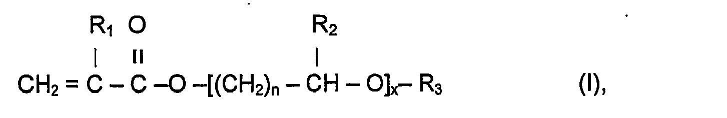 wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, the monomer mixture (M) being substantially free from monomers which are not soluble in water.

2. A process for preparing an aqueous polymer dispersion, comprising the steps of polymerising one or more water-soluble monomers (m) in an aqueous solution of a salt in the presence of a dispersant polymer, **characterised in that** the dispersant polymer is a co-polymer of a monomer mixture (M) comprising at least one cationic vinyl monomer (m₃) and at least one monomer (m₄) which is tetrahydrofurfuryl acrylate, tetrahydrofurfuryl methacrylate, or a monomer of the general formula (I): 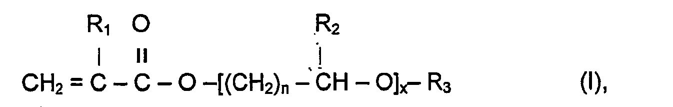 wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, the dispersant polymer is obtainable by polymerising the monomer mixture (M) in a reaction medium which is substantially free from organic solvents.

3. A process for preparing an aqueous polymer dispersion, comprising the steps of polymerising one or more water-soluble monomers (m) in an aqueous solution of a salt in the presence of a dispersant polymer, **characterised in that** the dispersant polymer is a co-polymer of a monomer mixture (M) comprising at least one cationic vinyl monomer (m₃) and at least one monomer (m₄) which is tetrahydrofurfuryl acrylate, tetrahydrofurfuryl methacrylate, or a monomer of the general formula (I): 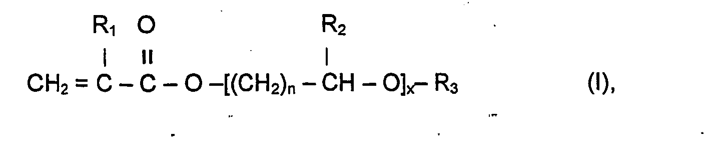 wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, the dispersant polymer is obtainable by polymerising the monomer mixture (M) in an aqueous reaction medium.

4. A process according to any of claims 1-3, **characterised in that** the water-soluble monomers (m) comprise a non-ionic monomer (m₁) and a cationic monomer (m₂).

5. A process according to any of claims 1-4, **characterised in that** the dispersant polymer is added to the process as a composition comprising a substantial part of the reaction medium in which it was produced.

6. A process according to any of claims 1-5, **characterised in that** the dispersant polymer comprises (a) from about 90 to about 99 mole % of monomer(s) which is/are belonging to the group of cationic monomers (m₃), and, (b) from about 1 to about 10 mole % of monomer(s) (m₄).

7. A process according to any of claims 1-6, **characterised in that** the cationic vinyl monomer, (m₃), is diallyldimethylammonium chloride (DADMAC), vinylpyridinium chloride, N-vinylimidazoliniuim chloride, vinylbenzyltrimethylammonium chloride, or has the general formula (IV): 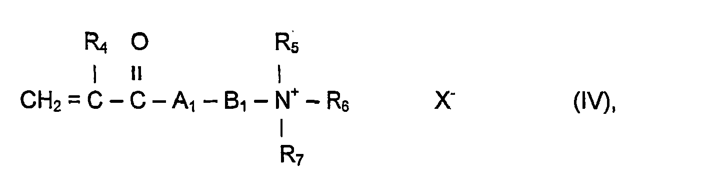 wherein R₄ is hydrogen or methyl, R₅, R₆ and R₇ are, independently from each other, any of hydrogen, C₁-C₈ alkyl, or, benzyl, A₁ is NH or oxygen, B₁ is C₁-C₂ alkyl or C₁-C₂ hydroxyalkyl, X⁻ is an anionic counterion.

8. A process according to any of claims 1-7, **characterised in that** the dispersant polymer has a weight average molecular weight from about 100.000 to about 2.000.000 g/mole.

9. A process according to any of claims 4-8, **characterised in that** the non-ionic monomer, (m₁), is a monomer of the general formula (II): 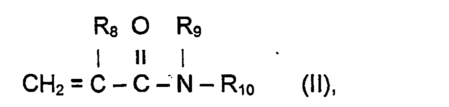 wherein R₈ is hydrogen or methyl, and R₉ and R₁₀ are, independently from each other, any of hydrogen, C₁-C₂ alkyl, or isopropyl.

10. A process according to any of claims 4-9, **characterised in that** the cationic monomer, (m₂), is a monomer of the general formula (III): 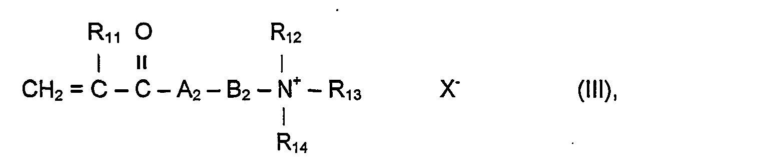 wherein R₁₁ is hydrogen or methyl, R₁₂, R₁₃ and R₁₄ are, independently from each other, any of hydrogen, C₁-C₈ alkyl or benzyl, A₂ is oxygen or NH, B₂ is C₂-C₄ alkyl or C₂-C₄ hydroxyalkyl, X⁻ is an anionic counterion.

11. A process according to any of claims 4-10, **characterised in that** the molar ratio between monomer(s) (m₁) and monomer(s) (m₂) is from about 92:8 to about 85:15.

12. A process according to any of claims 1-11, **characterised in that** the solution of salt comprises a polyvalent anion salt.

13. A process according to any of claims 1-12, **characterised in that** the concentration of salt is from about 15 weight % to about 35 weight %, based on the amount of water.

14. An aqueous polymer dispersion obtainable by a process according to any one of claims 1-13.

15. An aqueous polymer dispersion comprising:
(a) a dispersed polymer, and, (b) a dispersant polymer which is a co-polymer of a monomer mixture (M) comprising at least one cationic vinyl monomer (m₃) and at least one monomer (m₄) which is tetrahydrofurfuryl acrylate, tetrahydrofurfuryl methacrylate, or a monomer of the general formula (I): 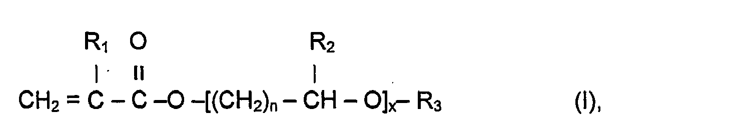
wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, and, (c) a salt, the monomer mixture (M) being substantially free from monomers which are not soluble in water.

16. An aqueous polymer dispersion comprising:
(a) a dispersed polymer, and, (b) a dispersant polymer which is a co-polymer of a monomer mixture comprising at least one cationic vinyl monomer (m₃) and at least one monomer (m₄) which is tetrahydrofurfuryl acrylate, tetrahydrofurfuryl methacrylate, or a monomer of the general formula (I): 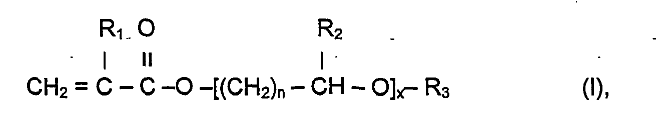
wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, and, (c) a salt, the dispersant polymer is obtainable by polymerising the monomer mixture (M) in a medium which is substantially free from organic solvents.

17. An aqueous polymer dispersion comprising:
(a) a dispersed polymer, and, (b) a dispersant polymer which is a co-polymer of a monomer mixture comprising at least one cationic vinyl monomer (m₃) and at least one monomer (m₄) which is tetrahydrofurfuryl acrylate, tetrahydrofurfuryl methacrylate, or a monomer of the general formula (I): 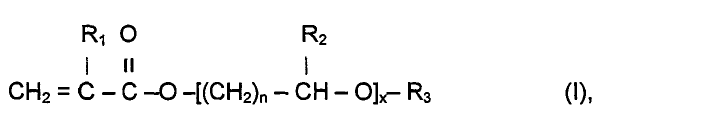
wherein R₁ is hydrogen or methyl, R₂ is hydrogen or C₁-C₂ alkyl, R₃ is hydrogen, C₁-C₄ alkyl, phenyl, or benzyl, n= 1 to 4, and x = 1 to 50, and, (c) a salt, the dispersant polymer is obtainable by polymerising the monomer mixture (M) in an aqueous phase.

18. An aqueous polymer dispersion according to any of claims 15-17, **characterised in that** it comprises:
(a) from about 12 to about 25 weight % of the dispersed polymer, and,
(b) from about 0.8 to about 1.5 weight % of the dispersant polymer, calculated as dry polymer.

19. An aqueous polymer dispersion according to any of claims 15-18, **characterised in that** it comprises from about 15 to about 35 weight % of a salt.

20. A polymer dispersion according to any of claims 15-19, **characterised in that** the dispersed polymer is a co-polymer of at least one first water-soluble monomer (m₁) of the general formula (II): 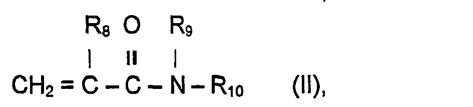 wherein R₈ is hydrogen or methyl, and R₉ and R₁₀ are, independently from each other, any of hydrogen, C₁-C₂ alkyl, or isopropyl, and at least one second water-soluble monomer (m₂) of the general formula (III): 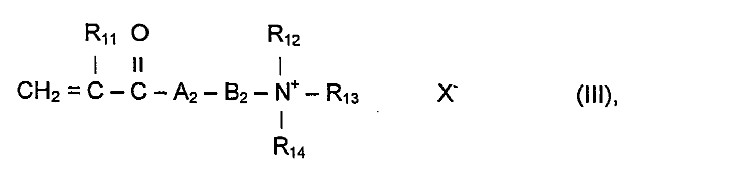 wherein R₁₁ is hydrogen or methyl, R₁₂, R₁₃ and R₁₄ are, independently from each other, any of hydrogen, C₁-C₈ alkyl or benzyl, A₂ is oxygen or NH, B₂ is C₂-C₄ alkyl or C₂-C₄ hydroxyalkyl, X is an anionic counterion.

21. Use of a polymer dispersion according to any of claims 14-20 as retention aid for paper manufacturing, as thickening agent and/or as soil improvement agent.

22. A process for the production of paper from an aqueous suspension containing cellulosic fibres, and optional fillers, which comprises adding to the suspension a polymer dispersion according to any of claims 14-20, forming and draining the suspension on a wire.

## Patentansprüche

1. Verfahren zur Herstellung einer wässrigen Polymerdispersion, umfassend das Polymerisieren eines oder mehrerer wasserlöslicher Monomere (m) in einer wässrigen Salzlösung in Gegenwart eines Dispergiermittelpolymers, **dadurch gekennzeichnet, dass** das Dispergiermittelpolymer ein Copolymer eines Monomergemisches (M) ist, welches mindestens ein kationisches Vinylmonomer (m₃) und mindestens ein Monomer (m₄), welches Tetrahydrofurfurylacrylat, Tetrahydrofurfurylmethacrylat oder ein Monomer der allgemeinen Formel I ist: 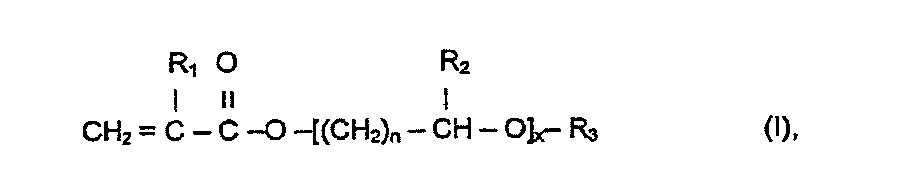 umfasst,
wobei R₁ ein Wasserstoffatom oder Methyl ist, R₂ ein Wasserstoffatom oder C₁-C₂-Alkyl ist, R₃ ein Wasserstoffatom, C₁-C₄-Alkyl, Phenyl oder Benzyl ist, n = 1 bis 4 und x = 1 bis 50, wobei das Monomergemisch (M) im Wesentlichen frei von Monomeren ist, welche nicht in Wasser löslich sind.

2. Verfahren zur Herstellung einer wässrigen Polymerdispersion, umfassend die Schritte des Polymerisierens eines oder mehrerer wasserlöslicher Monomere (m) in einer wässrigen Salzlösung in Gegenwart eines Dispergiermittelpolymers, **dadurch gekennzeichnet, dass** das Dispergiermittelpolymer ein Copolymer eines Monomergemisches (M) ist, welches mindestens ein kationisches Vinylmonomer (m₃) und mindestens ein Monomer (m₄), welches Tetrahydrofurfurylacrylat, Tetrahydrofurfurylmethacrylat oder ein Monomer der allgemeinen Formel (I) ist: 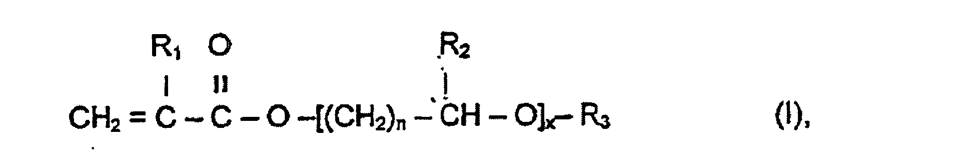 umfasst,
wobei R₁ ein Wasserstoffatom oder Methyl ist, R₂ ein Wasserstoffatom oder C₁-C₂-Alkyl ist, R₃ ein Wasserstoffatom, C₁-C₄-Alkyl, Phenyl oder Benzyl ist, n = 1 bis 4 und x = 1 bis 50, wobei das Dispergiermittelpolymer durch Polymerisieren des Monomergemisches (M) in einem Reaktionsmedium, welches im Wesentlichen frei von organischen Lösungsmitteln ist, erhältlich ist.

3. Verfahren zur Herstellung einer wässrigen Polymerdispersion, umfassend die Schritte des Polymerisierens eines oder mehrerer wasserlöslicher Monomere (m) in einer wässrigen Salzlösung in Gegenwart eines Dispergiermittelpolymers, **dadurch gekennzeichnet, dass** das Dispergiermittelpolymer ein Copolymer eines Monomergemisches (M) ist, welches mindestens ein kationisches Vinylmonomer (m₃) und mindestens ein Monomer (m₄), welches Tetrahydrofurfurylacrylat, Tetrahydrofurfurylmethacrylat oder ein Monomer der allgemeinen Formel (I) ist: 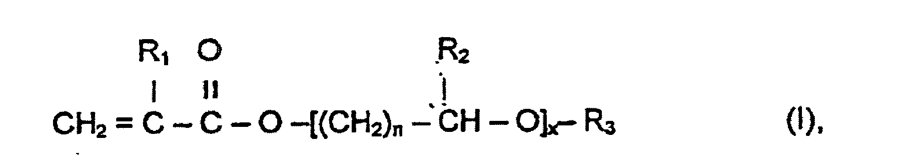 umfasst,
wobei R₁ ein Wasserstoffatom oder Methyl ist, R₂ ein Wasserstoffatom oder C₁-C₂-Alkyl ist, R₃ ein Wasserstoffatom, C₁-C₄-Alkyl, Phenyl oder Benzyl ist, n = 1 bis 4 und x = 1 bis 50 ist, wobei das Dispergiermittelpolymer durch Polymerisieren des Monomergemisches (M) in einem wässrigen Reaktionsmedium erhältlich ist.

4. Verfahren gemäß einem der Ansprüche 1 bis 3, **dadurch gekennzeichnet, dass** die wasserlöslichen Monomere (m) ein nicht ionisches Monomer (m₁) und ein kationisches Monomer (m₂) umfassen.

5. Verfahren gemäß einem der Ansprüche 1 bis 4, **dadurch gekennzeichnet, dass** das Dispergiermittelpolymer dem Verfahren als Zusammensetzung zugegeben wird, welche einen wesentlichen Teil des Reaktionsmediums, in welchem sie hergestellt wurde, umfasst.

6. Verfahren gemäß einem der Ansprüche 1 bis 5, **dadurch gekennzeichnet, dass** das Dispergiermittelpolymer (a) etwa 90 bis etwa 99 Mol-% Monomer(e) umfasst, welche(s) zu der Gruppe der kationischen Monomere (m₃) gehören und (b) etwa 1 bis etwa 10
Mol-% Monomer(e) (m₄) umfasst.

7. Verfahren gemäß einem der Ansprüche 1 bis 6, **dadurch gekennzeichnet, dass** das kationische Vinylmonomer (m₃) Diallyldimethylammoniumchlorid (DADMAC), Vinylpyridiniumchlorid, N-Vinylimidazoliniumchlorid, Vinylbenzyltrimethylammoniumchlorid ist oder die allgemeine Formel (IV) 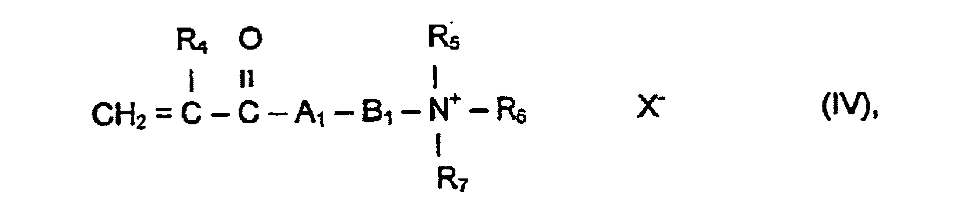 aufweist,
wobei R₄ ein Wasserstoffatom oder Methyl ist, R₅, R₆ und R₇ unabhängig voneinander irgend eines aus Wasserstoff, C₁-C₈-Alkyl oder Benzyl darstellen, A₁ für NH oder ein Sauerstoffatom steht, B₁ für C₁-C₂-Alkyl oder C₁-C₂-Hydroxyalkyl steht, X⁻ ein anionisches Gegenion ist.

8. Verfahren gemäß einem der Ansprüche 1 bis 7, **dadurch gekennzeichnet, dass** das Dispergiermittelpolymer ein Gewichtsmittel des Molekulargewichts von etwa 100.000 bis etwa 2.000.000 g/Mol aufweist.

9. Verfahren gemäß einem der Ansprüche 4 bis 8, **dadurch gekennzeichnet, dass** das nicht ionische Monomer (m₁) ein Monomer der allgemeinen Formel (II) ist: 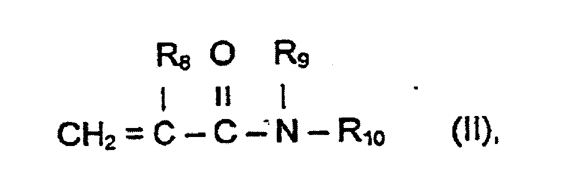 wobei R₈ ein Wasserstoffatom oder Methyl ist und R₉ und R₁₀ unabhängig voneinander irgend eines aus Wasserstoff, C₁-C₂-Alkyl oder Isopropyl sind.

10. Verfahren gemäß einem der Ansprüche 4 bis 9, **dadurch gekennzeichnet, dass** das kationische Monomer (m₂) ein Monomer der allgemeinen Formel (III) ist: 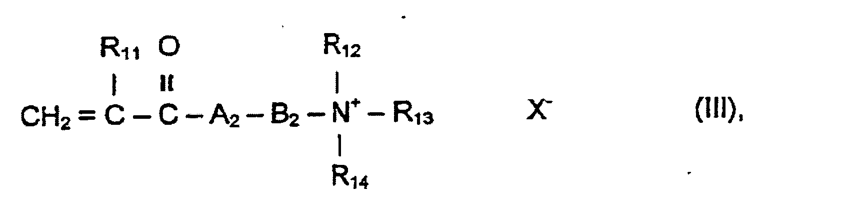 wobei R₁₁ ein Wasserstoffatom oder Methyl ist, R₁₂, R₁₃ und R₁₄ unabhängig voneinander irgend eines aus Wasserstoff, C₁-C₈-Alkyl oder Benzyl sind, A₂ ein Sauerstoffatom oder NH ist, B₂ für C₂-C₄-Alkyl oder C₂-C₄-Hydroxyalkyl steht, X⁻ ein anionisches Gegenion ist.

11. Verfahren gemäß einem der Ansprüche 4 bis 10, **dadurch gekennzeichnet, dass** das Molverhältnis zwischen Monomer(en) (m₁) und Monomer(en) (m₂) etwa 92:8 bis etwa 85:15 beträgt.

12. Verfahren gemäß einem der Ansprüche 1 bis 11, **dadurch gekennzeichnet, dass** die Salzlösung ein Salz eines mehrwertigen Anions umfasst.

13. Verfahren gemäß einem der Ansprüche 1 bis 12, **dadurch gekennzeichnet, dass** die Salzkonzentration etwa 15 Gew.-% bis etwa 35 Gew.-%, bezogen auf die Wassermenge, beträgt.

14. Wässrige Polymerdispersion, welche durch ein Verfahren gemäß einem der Ansprüche 1 bis 13 erhältlich ist.

15. Wässrige Polymerdispersion, umfassend:
(a) ein dispergiertes Polymer und (b) ein Dispergiermittelpolymer, welches ein Copolymer eines Monomergemisches (M) ist, umfassend mindestens ein kationisches Vinylmonomer (m₃) und mindestens ein Monomer (m₄), welches Tetrahydrofurfurylacrylat, Tetrahydrofurfurylmethacrylat oder ein Monomer der allgemeinen Formel (I) ist: 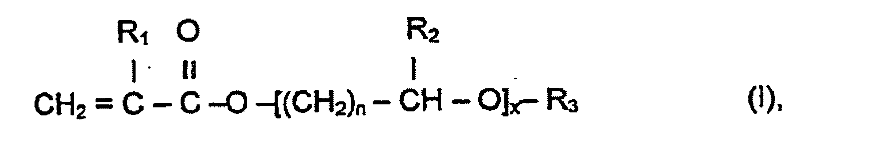
wobei R₁ ein Wasserstoffatom oder Methyl ist, R₂ ein Wasserstoffatom oder C₁-C₂-Alkyl ist, R₃ ein Wasserstoffatom, C₁-C₄-Alkyl, Phenyl oder Benzyl ist, n = 1 bis 4 und x = 1 bis 50, und (c) ein Salz, wobei das Monomergemisch (M) im Wesentlichen frei von Monomeren ist, welche nicht in Wasser löslich sind.

16. Wässrige Polymerdispersion, umfassend:
(a) ein dispergiertes Polymer und (b) ein Dispergiermittelpolymer, welches ein Copolymer eines Monomergemisches ist, umfassend mindestens ein kationisches Vinylmonomer (m₃) und mindestens ein Monomer (m₄), welches Tetrahydrofurfurylacrylat, Tetrahydrofurfurylmethacrylat oder ein Monomer der allgemeinen Formel (I) ist: 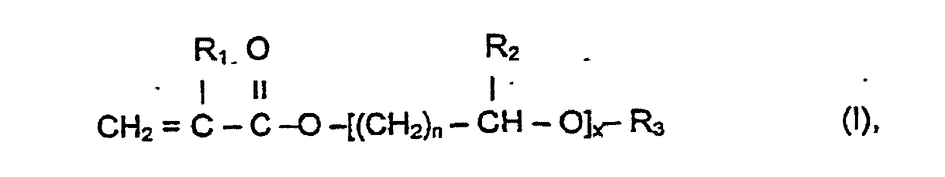
wobei R₁ ein Wasserstoffatom oder Methyl ist, R₂ ein Wasserstoffatom oder C₁-C₂-Alkyl ist, R₃ ein Wasserstoffatom, C₁-C₄-Alkyl, Phenyl oder Benzyl ist, n = 1 bis 4 und x = 1 bis 50, und (c) ein Salz, wobei das Dispergiermittelpolymer erhältlich ist durch Polymerisieren des Monomergemisches (M) in einem Medium, welches im Wesentlichen frei von organischen Lösungsmitteln ist.

17. Wässrige Polymerdispersion, umfassend:
(a) ein dispergiertes Polymer und (b) ein Dispergiermittelpolymer, welches ein Copolymer eines Monomergemisches ist, umfassend mindestens ein kationisches Vinylmonomer (m₃) und mindestens ein Monomer (m₄), welches Tetrahydrofurfurylacrylat, Tetrahydrofurfurylmethacrylat oder ein Monomer der allgemeinen Formel (I) ist: 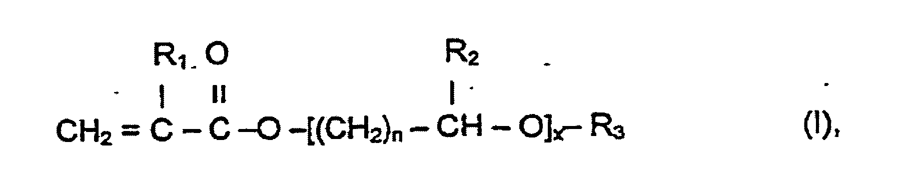
wobei R₁ ein Wasserstoffatom oder Methyl ist, R₂ ein Wasserstoffatom oder C₁-C₂-Alkyl ist, R₃ ein Wasserstoffatom, C₁-C₄-Alkyl, Phenyl oder Benzyl ist, n = 1 bis 4 und x = 1 bis 50, und (c) ein Salz, wobei das Dispergiermittelpolymer durch Polymerisieren des Monomergemisches (M) in einer wässrigen Phase erhältlich ist.

18. Wässrige Polymerdispersion gemäß einem der Ansprüche 15 bis 17, **dadurch gekennzeichnet, dass** die wässrige Polymerdispersion
(a) etwa 12 bis etwa 25 Gew.-% des dispergierten Polymers und
(b) etwa 0,8 bis etwa 1,5 Gew.-% des Dispergiermittelpolymers, berechnet als trockenes Polymer,
umfasst.

19. Wässrige Polymerdispersion gemäß einem der Ansprüche 15 bis 18, **dadurch gekennzeichnet, dass** die wässrige Polymerdispersion etwa 15 bis etwa 35 Gew.-% eines Salzes umfasst.

20. Polymerdispersion gemäß einem der Ansprüche 15 bis 19, **dadurch gekennzeichnet, dass** das dispergierte Polymer ein Copolymer ist von mindestens einem ersten wasserlöslichen Monomer (m₁) der allgemeinen Formel (II): 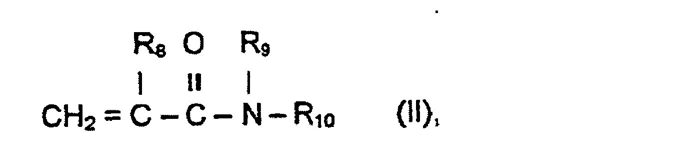 wobei R₈ ein Wasserstoffatom oder Methyl ist und R₉ und R₁₀ unabhängig voneinander irgend eines aus Wasserstoff, C₁-C₂-Alkyl oder Isopropyl sind,
und mindestens einem zweiten wasserlöslichen Monomer (m₂) der allgemeinen Formel (III): 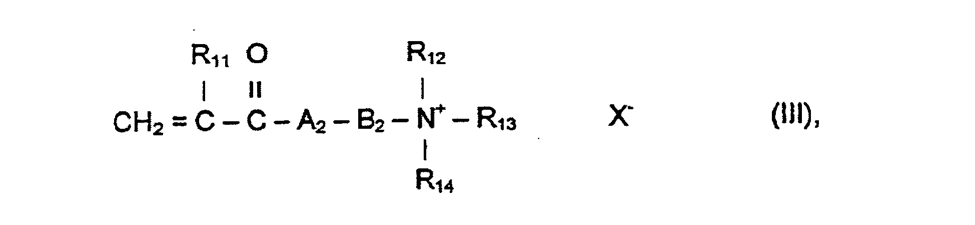 wobei R₁₁ ein Wasserstoffatom oder Methyl ist, R₁₂, R₁₃ und R₁₄ unabhängig voneinander irgend eines aus Wasserstoff, C₁-C₈-Alkyl oder Benzyl sind, A₂ ein Sauerstoffatom oder NH ist, B₂ für C₂-C₄-Alkyl der C₂-C₄-Hydroxyalkyl steht, X ein anionisches Gegenion ist.

21. Verwendung einer Polymerdispersion gemäß einem der Ansprüche 14 bis 20 als Retentionshilfe bei der Papierherstellung, als Verdickungsmittel und/oder als Mittel zur Verbesserung des Erdreichs.

22. Verfahren zur Herstellung von Papier aus einer wässrigen Suspension enthaltend Cellulosefasern und gegebenenfalls Füllstoffe, wobei das Verfahren die Zugabe einer Polymerdispersion gemäß einem der Ansprüche 14 bis 20 zu der Suspension, das Formen und Entwässern der Suspension am Sieb umfasst.

## Revendications

1. Procédé de préparation d'une dispersion aqueuse de polymères, qui comporte le fait de faire polymériser un ou plusieurs monomères hydrosolubles (m), dans une solution aqueuse d'un sel, en présence d'un polymère dispersant, **caractérisé en ce que** ce polymère dispersant est un copolymère d'un mélange de monomères (M) comprenant au moins un monomère vinylique cationique (m₃) et au moins un monomère (m₄) qui est de l'acrylate de tétrahydrofurfuryle, du méthacrylate de tétrahydrofurfuryle ou un monomère de formule générale (I) : 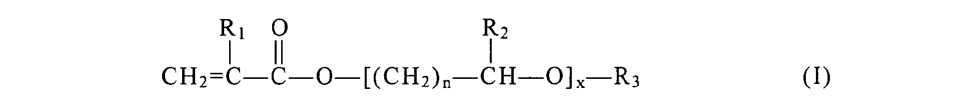 dans laquelle R₁ représente un atome d'hydrogène ou un groupe méthyle, R₂ représente un atome d'hydrogène ou un groupe alkyle en C₁₋₂, R₃ représente un atome d'hydrogène ou un groupe alkyle en C₁₋₄, phényle ou benzyle, n vaut de 1 à 4 et x vaut de 1 à 50,
le mélange de monomères (M) ne contenant pratiquement pas de monomères insolubles dans l'eau.

2. Procédé de préparation d'une dispersion aqueuse de polymères, qui comporte les étapes consistant à faire polymériser un ou plusieurs monomères hydrosolubles (m), dans une solution aqueuse d'un sel, en présence d'un polymère dispersant, **caractérisé en ce que** ce polymère dispersant est un copolymère d'un mélange de monomères (M) comprenant au moins un monomère vinylique cationique (m₃) et au moins un monomère (m₄) qui est de l'acrylate de tétrahydrofurfuryle, du méthacrylate de tétrahydrofurfuryle ou un monomère de formule générale (I) : 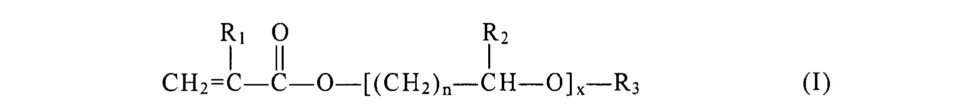 dans laquelle R₁ représente un atome d'hydrogène ou un groupe méthyle, R₂ représente un atome d'hydrogène ou un groupe alkyle en C₁₋₂, R₃ représente un atome d'hydrogène ou un groupe alkyle en C₁₋₄, phényle ou benzyle, n vaut de 1 à 4 et x vaut de 1 à 50, le polymère dispersant étant accessible par polymérisation du mélange de monomères (M) dans un milieu réactionnel ne contenant pratiquement pas de solvants organiques.

3. Procédé de préparation d'une dispersion aqueuse de polymères, qui comporte les étapes consistant à faire polymériser un ou plusieurs monomères hydrosolubles (m), dans une solution aqueuse d'un sel, en présence d'un polymère dispersant, **caractérisé en ce que** ce polymère dispersant est un copolymère d'un mélange de monomères (M) comprenant au moins un monomère vinylique cationique (m₃) et au moins un monomère (m₄) qui est de l'acrylate de tétrahydrofurfuryle, du méthacrylate de tétrahydrofurfuryle ou un monomère de formule générale (I) : 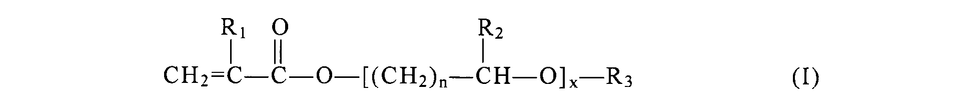 dans laquelle R₁ représente un atome d'hydrogène ou un groupe méthyle, R₂ représente un atome d'hydrogène ou un groupe alkyle en C₁₋₂, R₃ représente un atome d'hydrogène ou un groupe alkyle en C₁₋₄, phényle ou benzyle, n vaut de 1 à 4 et x vaut de 1 à 50,
le polymère dispersant étant accessible par polymérisation du mélange de monomères (M) dans un milieu réactionnel aqueux.

4. Procédé conforme à l'une des revendications 1 à 3, **caractérisé en ce que** les monomères hydrosolubles (m) comportent un monomère non-ionique (m₁) et un monomère cationique (m₂).

5. Procédé conforme à l'une des revendications 1 à 4, **caractérisé en ce que** le polymère dispersant est introduit dans le procédé sous la forme d'une composition constituée, pour une fraction importante, du milieu réactionnel dans lequel il a été produit.

6. Procédé conforme à l'une des revendications 1 à 5, **caractérisé en ce que** le dispersant polymère comprend :
a) d'environ 90 à environ 99 % en moles de monomère(s) appartenant à l'ensemble des monomères cationiques (m₃),
b) et d'environ 1 à environ 10 % en moles de monomère(s) (m₄).

7. Procédé conforme à l'une des revendications 1 à 6, **caractérisé en ce que** le monomère vinylique cationique (m₃) est du chlorure de diallyl-di-méthyl-ammonium (DADMAC), du chlorure de vinyl-pyridinium, du chlorure de N-vinyl-imidazolinium ou du chlorure de vinylbenzyl-triméthyl-ammonium, ou correspond à la formule générale (IV) : 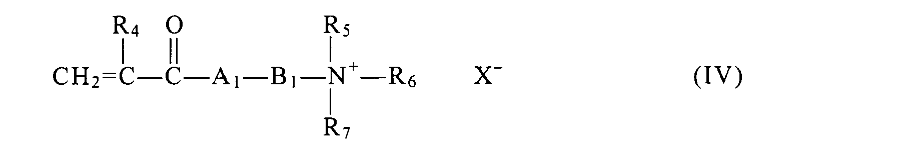 dans laquelle R₄ représente un atome d'hydrogène ou un groupe méthyle, R₅, R₆ et R₇ représentent chacun, indépendamment les uns des autres, un atome d'hydrogène ou un groupe alkyle en C₁₋₈ ou benzyle, A₁ représente un chaînon NH ou un atome d'oxygène, B₁ représente un groupe alkyle en C₁₋₂ ou hydroxyalkyle en C₁₋₂, et X⁻ représente un contre-ion anionique.

8. Procédé conforme à l'une des revendications 1 à 7, **caractérisé en ce que** le polymère dispersant présente une masse molaire moyenne en poids d'environ 100 000 à environ 2 000 000 g/mol.

9. Procédé conforme à l'une des revendications 4 à 8, **caractérisé en ce que** le monomère non-ionique (m₁) est un monomère de formule générale (II) : 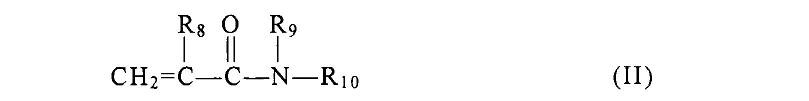 dans laquelle R₈ représente un atome d'hydrogène ou un groupe méthyle, et R₉ et R₁₀ représentent chacun, indépendamment l'un de l'autre, un atome d'hydrogène, un groupe alkyle en C₁₋₂ ou un groupe isopropyle.

10. Procédé conforme à l'une des revendications 4 à 9, **caractérisé en ce que** le monomère cationique (m₂) est un monomère de formule générale (III) : 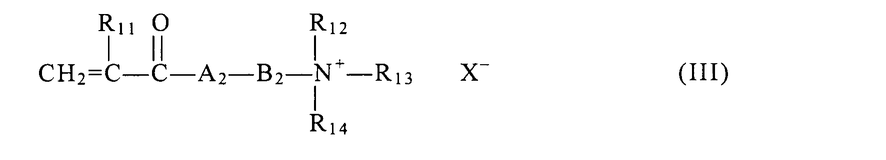 dans laquelle R₁₁ représente un atome d'hydrogène ou un groupe méthyle, R₁₂, R₁₃ et R₁₄ représentent chacun, indépendamment les uns des autres, un atome d'hydrogène ou un groupe alkyle en C₁₋₈ ou benzyle, A₂ représente un chaînon NH ou un atome d'oxygène, B₂ représente un groupe alkyle en C₂₋₄ ou hydroxyalkyle en C₂₋₄, et X⁻ représente un contre-ion anionique.

11. Procédé conforme à l'une des revendications 4 à 10, **caractérisé en ce que** le rapport molaire entre le ou les monomère(s) (m₁) et le ou les monomère(s) (m₂) vaut d'environ 92/8 à environ 85/15.

12. Procédé conforme à l'une des revendications 1 à 11, **caractérisé en ce que** la solution de sel contient un sel d'anion polyvalent.

13. Procédé conforme à l'une des revendications 1 à 12, **caractérisé en ce que** la concentration de sel vaut d'environ 15 à environ 35 % en poids par rapport à la quantité d'eau.

14. Dispersion aqueuse de polymères, accessible par un procédé conforme à l'une des revendications 1 à 13.

15. Dispersion aqueuse de polymères, comprenant :
a) un polymère dispersé,
b) et un polymère dispersant qui est un copolymère d'un mélange de monomères (M) comprenant au moins un monomère vinylique cationique (m₃) et au moins un monomère (m₄) qui est de l'acrylate de tétrahydrofurfuryle, du méthacrylate de tétrahydrofurfuryle ou un monomère de formule générale (I) : 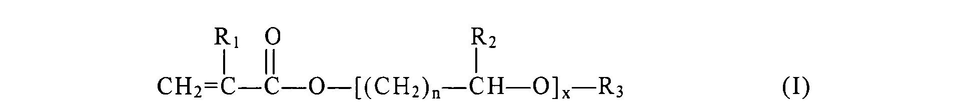 dans laquelle R₁ représente un atome d'hydrogène ou un groupe méthyle, R₂ représente un atome d'hydrogène ou un groupe alkyle en C₁₋₂, R₃ représente un atome d'hydrogène ou un groupe alkyle en C₁₋₄, phényle ou benzyle, n vaut de 1 à 4 et x vaut de 1 à 50,
c) et un sel, le mélange de monomères (M) ne contenant pratiquement pas de monomères insolubles dans l'eau.

16. Dispersion aqueuse de polymères, comprenant :
a) un polymère dispersé,
b) et un polymère dispersant qui est un copolymère d'un mélange de monomères (M) comprenant au moins un monomère vinylique cationique (m₃) et au moins un monomère (m₄) qui est de l'acrylate de tétrahydrofurfuryle, du méthacrylate de tétrahydrofurfuryle ou un monomère de formule générale (I) : 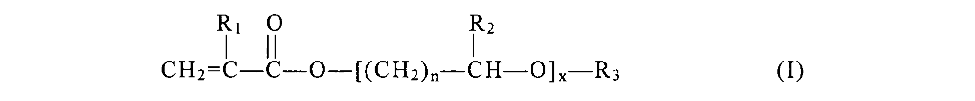 dans laquelle R₁ représente un atome d'hydrogène ou un groupe méthyle, R₂ représente un atome d'hydrogène ou un groupe alkyle en C₁₋₂, R₃ représente un atome d'hydrogène ou un groupe alkyle en C₁₋₄, phényle ou benzyle, n vaut de 1 à 4 et x vaut de 1 à 50,
c) et un sel,
le polymère dispersant étant accessible par polymérisation du mélange de monomères (M) dans un milieu réactionnel ne contenant pratiquement pas de solvants organiques.

17. Dispersion aqueuse de polymères, comprenant :
a) un polymère dispersé,
b) et un polymère dispersant qui est un copolymère d'un mélange de monomères (M) comprenant au moins un monomère vinylique cationique (m₃) et au moins un monomère (m₄) qui est de l'acrylate de tétrahydrofurfuryle, du méthacrylate de tétrahydrofurfuryle ou un monomère de formule générale (I) : 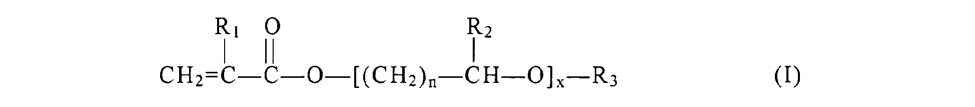 dans laquelle R₁ représente un atome d'hydrogène ou un groupe méthyle, R₂ représente un atome d'hydrogène ou un groupe alkyle en C₁₋₂, R₃ représente un atome d'hydrogène ou un groupe alkyle en C₁₋₄, phényle ou benzyle, n vaut de 1 à 4 et x vaut de 1 à 50,
c) et un sel,
le polymère dispersant étant accessible par polymérisation du mélange de monomères (M) en phase aqueuse.

18. Dispersion aqueuse de polymères, conforme à l'une des revendications 15 à 17, **caractérisée en ce qu'**elle comprend :
a) d'environ 12 à environ 25 % en poids du polymère dispersé,
b) et d'environ 0,8 à environ 1,5 % en poids du polymère dispersant, pourcentages calculés en polymère sec.

19. Dispersion aqueuse de polymères, conforme à l'une des revendications 15 à 18, **caractérisée en ce qu'**elle comprend d'environ 15 à environ 35 % en poids d'un sel.

20. Dispersion aqueuse de polymères, conforme à l'une des revendications 15 à 19, **caractérisée en ce que** le polymère dispersé est un copolymère d'au moins un premier monomère hydrosoluble (m₁), de formule générale (II) : 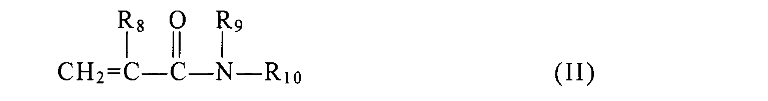 dans laquelle R₈ représente un atome d'hydrogène ou un groupe méthyle, et R₉ et R₁₀ représentent chacun, indépendamment l'un de l'autre, un atome d'hydrogène, un groupe alkyle en C₁₋₂ ou un groupe isopropyle, et d'au moins un deuxième monomère hydrosoluble (m₂), de formule générale (III) : 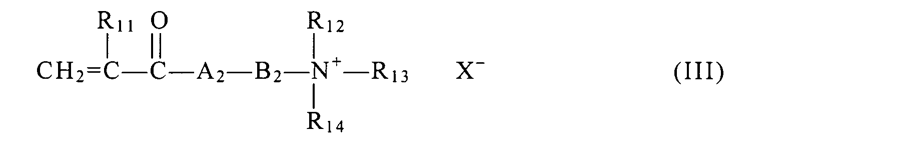 dans laquelle R₁₁ représente un atome d'hydrogène ou un groupe méthyle, R₁₂, R₁₃ et R₁₄ représentent chacun, indépendamment les uns des autres, un atome d'hydrogène ou un groupe alkyle en C₁₋₈ ou benzyle, A₂ représente un chaînon NH ou un atome d'oxygène, B₂ représente un groupe alkyle en C₂₋₄ ou hydroxyalkyle en C₂₋₄, et X⁻ représente un contre-ion anionique.

21. Emploi d'une dispersion de polymères conforme à l'une des revendications 14 à 20 comme adjuvant de rétention pour la fabrication de papier, comme agent épaississant et/ou comme agent d'amélioration de sol.

22. Procédé de production de papier, à partir d'une suspension aqueuse contenant des fibres cellulosiques et, en option, des charges, lequel procédé comporte le fait d'ajouter à cette suspension une dispersion de polymères conforme à l'une des revendications 14 à 20, et le fait de mettre la suspension en forme sur une toile et de l'y laisser s'égoutter.
